(19) Europäisches Patentamt / European Patent Office / Office européen des brevets

(11) **EP 4 783 289 A1**

(12) **EUROPEAN PATENT APPLICATION**
published in accordance with Art. 153(4) EPC

(43) Date of publication:
**29.07.2026 Bulletin 2026/31**

(21) Application number: **25861776.0**

(22) Date of filing: **17.01.2025**

(51) International Patent Classification (IPC):
**H01M 10/0567** (2010.01)    **H01M 10/0525** (2010.01)

(52) Cooperative Patent Classification (CPC):
Y02E 60/10

(86) International application number:
**PCT/CN2025/072973**

(87) International publication number:
**WO 2026/123443 (18.06.2026 Gazette 2026/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.12.2024 CN 202411804332**

(71) Applicant: Eve Power Co., Ltd.
**Jingmen, Hubei 448000 (CN)**

(72) Inventors:
• WEI, Haitao
**Jingmen, Hubei 448000 (CN)**
• CHEN, Ruoling
**Jingmen, Hubei 448000 (CN)**
• WANG, Kai
**Jingmen, Hubei 448000 (CN)**
• ZHU, Weihua
**Jingmen, Hubei 448000 (CN)**

(74) Representative: **Herrero & Asociados, S.L.**
**Edificio Aqua - Calle Agustín de Foxá, 4-10, 2ºA**
**28036 Madrid (ES)**

(54) **LITHIUM-ION BATTERY**

(57) The present disclosure provides a lithium-ion battery, including a solvent, a lithium salt and an electrolyte. The electrolyte includes additives. A proportion of the additives in the electrolyte is denoted as $A_{dd}$, with a unit of $A_{dd}$ being parts. A charging cutoff voltage of the lithium-ion battery is denoted as $V_{ol}$, with a unit of $V_{ol}$ being V. A CB value of the lithium-ion battery, the $A_{dd}$ and the $V_{ol}$ satisfy $0.98 \leq \dfrac{CB \times V_{ol}}{A_{dd}} \leq 1.54$ , wherein the CB value of the lithium-ion battery is a dimensionless numerical value. The additives include a negative electrode film-forming additive, a positive electrode complexing additive, and a high-voltage-resistant positive electrode additive.

EP 4 783 289 A1

**Description**

The present disclosure claims priority to Chinese Patent Application No. 2024118043325, filed with the Chinese Patent Office on December 09, 2024, the disclosures of which is incorporated herein by reference in its entirety.

**TECHNICAL FIELD**

The present disclosure relates to the field of lithium-ion battery technologies, and in particular, to a lithium-ion battery.

**BACKGROUND**

Batteries with high energy density can provide longer operating time and driving range under at a given mass, which is particularly critical for applications demanding high energy density of batteries.

At present, in order to increase the energy density of power batteries, appropriately increasing a charging cutoff voltage can helps a cathode deliver higher specific capacity. In this case, typically, a CB value of the lithium-ion battery is simultaneously adjusted to a higher level to prevent lithium plating on an anode.

**TECHNICAL PROBLEM**

An increased CB value of the lithium-ion battery leads to a higher oxidation potential at the cathode, which can trigger oxidative decomposition of the electrolyte under high potentials, thereby deteriorating the cycling performance of the lithium-ion battery. Moreover, an increase in the charging cutoff voltage may cause dissolution of transition metals (e.g., Fe&Mn) from the cathode. These dissolved transition metal ions further promote the reductive decomposition of ethylene carbonate (EC) in the electrolyte, ultimately depositing as metallic species on the anode surface. This process continuously damages solid electrolyte interphase (SEI) layer on the surface of the anode, which will deteriorate the cycle performance of the lithium-ion battery.

**TECHNICAL SOLUTION**

The present disclosure provides a lithium-ion battery, which adopts the following technical solution:
A lithium-ion battery, including an electrolyte. The electrolyte includes a solvent, a lithium salt and additives. A proportion of the additives in the electrolyte is denoted as $A_{dd}$, with a unit of $A_{dd}$ being parts. A charging cutoff voltage of the lithium-ion battery is denoted as $V_{ol}$, with a unit of $V_{ol}$ being V. A CB value of the lithium-ion battery, the $A_{dd}$ and the $V_{ol}$ satisfy

$$0.98 \leq \frac{CB \times V_{ol}}{A_{dd}} \leq 1.54,$$ wherein the CB value of the lithium-ion battery is a dimensionless numerical value. The additives include a negative electrode film-forming additive, a positive electrode complexing additive, and a high-voltage-resistant positive electrode additive.

The CB value is a designed CB value, which is a ratio of a reversible capacity per unit area of a negative electrode sheet of the battery to a reversible capacity per unit area of a positive electrode sheet of the battery.

**BENEFICIAL EFFECTS**

In the present disclosure, by controlling the type of additives in the electrolyte and controlling the weight parts $A_{dd}$ of the additives per hundred parts of the electrolyte, the charging cutoff voltage $V_{ol}$ of the lithium-ion battery, and the CB value of the lithium-ion battery to satisfy the above condition, it is possible to avoid the metal ions at the positive electrode from being reduced at the negative electrode, and to ensure the complexation of transition metal ions at the positive electrode as far as possible, thereby improving the stability of the electrolyte and the stability of the SEI film at the surface of the negative electrode. In this case, the content of additives in the electrolyte can also be controlled within a suitable range, which not only avoid the destruction and recombination of the SEI film caused by the dissolution of the transition metal ions, but also avoid the decomposition of the electrolyte caused by the increase of the CB value of the lithium-ion battery, which helps to enable the lithium battery to maintain relatively excellent cycle performance while having high energy density.

When $\frac{CB \times V_{ol}}{A_{dd}} < 0.98$, that is, the charging cutoff voltage and the CB value of the lithium-ion battery are too low or the proportion of the additives in the electrolyte is too high, the energy density of the lithium-ion battery cannot be effectively exerted. In addition, during the cycling process of the lithium-ion battery, lithium deposition is prone to occur on the surface of the negative electrode. In addition, if the proportion of the additives in the electrolyte is too high, it will also affect the film formation on the surface of the negative electrode, which is not conducive to improving the cycle performance of the lithium-ion battery.

When $\frac{CB \times V_{ol}}{A_{dd}} > 1.54$, that is, the charging cutoff voltage and CB value of the lithium-ion battery are too high or the proportion of the additives in the electrolyte is too low, the electrolyte at this case will cause a large amount of transition metal ions to dissolve at the positive electrode, and these dissolved transition metal ions will be reduced at the surface of the negative electrode, thereby destroying the integrity, uniformity and stability of the SEI film on the surface of the negative electrode, which will cause the internal resistance of the lithium-ion battery to increase, and the transitionally dissolved metal ions will also reduce a structural interface of the positive electrode material, which is not conducive to improving the cycle performance of the lithium battery.

## DETAILED DESCRIPTION

Unless otherwise specified, all numerical values expressing material quantities, reaction conditions, etc., used in the specification and claims shall be understood as being modified by the term "about". Accordingly, unless indicated to the contrary, the numerical parameters set forth herein are approximations that may vary depending upon the desired properties sought to be obtained.

The term "and/or" as used herein refers to one or all of the associated listed items.

The term "comprising" and "including" as used herein encompasses the case where only the specified elements are present as well as the case where additional unspecified elements may also be present.

All percentages herein are by weight unless otherwise indicated.

Unless otherwise specified, the terms "a", "an", and "the" as used in this specification are intended to include "at least one" or "one or more". For example, "a component" refers to one or more components, and thus the implementation of the described embodiments may contemplate and optionally employ or utilize more than one component.

In some embodiments, the CB value of the lithium-ion battery, the $A_{dd}$ and the $V_{ol}$ satisfy $1.06 \leq \frac{CB \times V_{ol}}{A_{dd}} \leq 1.42$.

In some embodiments, the CB value of the lithium-ion battery ranges from 1.1 to 1.19.

In some embodiments, the CB value of the lithium-ion battery ranges from 1.11 to 1.17.

By adjusting the CB value of the lithium-ion battery to meet the above range, electrolyte decomposition in the lithium-ion battery can be avoided, which helps improve the cycle performance of the lithium-ion battery.

When the CB value is relatively high, during the charging and discharging process of the lithium-ion battery, the ratio of the lithium intercalation capacity of the negative electrode to the delithiation capacity of the positive electrode is relatively large, which will lead to excessive lithium intercalation of the negative electrode during the charging process, which not only consumes a large amount of electrolyte, but also reduces the ion conduction efficiency of the electrolyte, resulting in excessively high internal temperature rise of the battery under a high voltage, which will not be beneficial to improving the cycle performance and safety performance of the lithium-ion battery. When the CB value is too low, the lithium-ion insertion and extraction speed of the negative electrode is relatively fast, which will cause the lithium salt in the electrolyte to be consumed faster. Since the lithium salt is a main source for providing lithium-ions in the electrolyte, the rapid consumption of the lithium salt may cause the conductivity of the electrolyte to decrease, thereby causing the cycle life of the lithium-ion battery to be shortened, the operating temperature range to be narrowed, and even increasing the safety risk of the battery.

In some embodiments, the weight parts $A_{dd}$ of the additives per hundred parts of the electrolyte range from 3 to 5.2 parts.

In some embodiments, the weight parts $A_{dd}$ of the additives per hundred parts of the electrolyte range from 3.3 to 4.7 parts.

By adjusting the ratio $A_{dd}$ of the additive in the electrolyte to satisfy the above range, the destruction and recombination of the SEI film of the lithium-ion battery caused by the dissolution of transition metal ions can be avoided, and the cycle performance of the lithium-ion battery can be improved. When the $A_{dd}$ is high, the formation of the SEI film will be hindered, resulting in poor stability of the finally generated SEI film, which is not conducive to improving the cycle performance of the lithium-ion battery. When the $A_{dd}$ is relatively low, the SEI film generated at the negative electrode will be incomplete or poor in quality. The incomplete SEI film will cause the transmission of lithium-ions inside the battery to be blocked, increasing the internal resistance of the battery, reducing the discharge capacity and charging efficiency of the battery, and the incomplete SEI film cannot effectively protect the electrode material, which will cause the cycle performance of the lithium-ion battery to be significantly reduced.

In some embodiments, the charging cutoff voltage $V_{ol}$ of the lithium-ion battery ranges from 4.2 to 4.3V.

In some embodiments, the charging cutoff voltage $V_{ol}$ of the lithium-ion battery ranges from 4.21 to 4.28V.

By controlling the charging cutoff voltage of the lithium-ion battery to satisfy the above range, the capacity of the electrode material can be fully utilized, so that the energy density of the lithium-ion battery can be maintained at a high level. Furthermore, at this time, the charging cutoff voltage is coordinated with the CB value of the lithium-ion battery and the ratio $A_{dd}$ of the additives in the electrolyte, so that the electrolyte is not oxidized and decomposed, and a situation that transition metal ions are reduced does not occur at the negative electrode, and the SEI film is prevented from being damaged and recombined, thereby enabling the lithium-ion battery to have both high energy density and excellent cycle performance.

In some embodiments, the negative electrode film-forming additive includes at least one of vinylene carbonate (VC), fluoroethylene carbonate (FEC), vinylethylene carbonate (VEC); the positive electrode complexing additive includes at least one of trimethylsilyl phosphate (TMSP) and succinonitrile (SN); the high-voltage-resistant positive electrode additive includes at least one of 1,3-propane sultone (PS), and lithium difluoro(oxalato)borate (LiDFOB).

In some embodiments, the lithium salt includes at least one of lithium bis(fluorosulfonyl)imide and lithium hexafluorophosphate; a concentration of the lithium salt in the electrolyte is 0.85-1.5 mol/L.

In some embodiments, the lithium salt includes lithium bis(fluorosulfonyl)imide and lithium hexafluorophosphate.

In some embodiments, the solvent includes cyclic carbonate and linear carbonate; a mass ration of the solvent in the electrolyte is 80-90%.

In some embodiments, a volume ratio of the cyclic carbonate to the linear carbonate is 3-4.5:5.5-7.

In some embodiments, the cyclic carbonate includes at least one of ethylene carbonate (EC) and propylene carbonate (PC); the linear carbonate includes at least one of ethyl methyl carbonate (EMC), diethyl carbonate (DEC) and dimethyl carbonate (DMC).

In some embodiments, the lithium-ion battery further includes a positive electrode sheet and a negative electrode sheet, wherein a compacted density of the positive electrode sheet is 2.0-2.6 g/cm$^3$, and/or a single-side area density of the positive electrode sheet is 200-260 g/m$^2$.

In some embodiments, the compacted density of the positive electrode sheet is 2.1-2.5 g/cm$^3$, and/or a single-side area density of the positive electrode sheet is 210-250 g/m$^2$.

In some embodiments, a compaction density of the negative electrode sheet is 1.55-1.75 g/cm$^3$, and/or a single-side area density of the negative electrode sheet is 80-110 g/m$^2$.

In some embodiments, an electrolyte injection coefficient of the lithium-ion battery is 2.3-3.8 g/Ah.

The electrolyte injection coefficient is a ratio of an electrolyte consumption of the lithium-ion battery to a capacity of the battery itself in a normal usage state.

By controlling the electrolyte injection coefficient of the lithium-ion battery to satisfy the above range, on the one hand, the electrolyte can be adjusted to produce a good wetting effect on the positive electrode sheet and the negative electrode sheet, thereby significantly improving the capacity of positive and negative electrode active materials and reducing the impedance of the positive electrode sheet and the negative electrode sheet, which is not only beneficial to the energy density of the lithium-ion battery, but also beneficial to improving the cyclic performance of the lithium-ion battery; on the other hand, a size of an air storage space of the secondary battery can be adjusted, thereby reducing the swelling of the lithium-ion battery during the cycle process, which helps to improve the cycle performance of the lithium-ion battery.

Embodiment 1

1. Electrolyte preparation

The electrolyte includes a solvent, a lithium salt, and additives.

The lithium salt is composed of LiFSI and LiPF$_6$ at a mass ratio of 1:1, with a lithium salt concentration of 1.1 mol/L in the electrolyte.

solvent is composed of(ethylene carbonate (EC)) and linear carbonate (ethyl methyl carbonate (EMC)). A mass ratio of the solvent in the electrolyte is 85%, in which a volume ratio of the cyclic carbonate to the linear carbonate is 4:6.

The additives are composed of vinylene carbonate (VC), fluoroethylene carbonate (FEC), succinonitrile (SN), and lithium difluoro(oxalato)borate (LiDFOB), with weight parts of the additives per hundred parts of the electrolyte being 3.

2. Positive electrode sheet preparation

A positive electrode slurry is prepared by mixing lithium iron manganese phosphate as a positive electrode material, acetylene black as a conductive agent, and PVDF as a binder at a mass ratio of 96:2:2, adding NMP as a solvent, and stirring same under an action of a vacuum stirrer until the system is homogeneous. The positive electrode slurry is uniformly coated onto both surfaces of an aluminium foil of a positive electrode current collector using a double-sided coating process, left to dry at room temperature, and then further dried in an oven, and then subjected to cold-pressed and slit to obtain a positive electrode sheet with an area density of 220 g/m$^2$ and a compaction density of 2.4 g/cm$^3$.

### 3. Negative electrode sheet preparation

A negative electrode slurry is prepared by mixing graphite as a negative electrode material, acetylene black as a conductive agent, and CMC as a binder at a mass ratio of 97:1.5:1.5, adding deionized water as a solvent, and stirring same under an action of a vacuum stirrer until the system is homogeneous. The negative electrode slurry is uniformly coated onto both surfaces of a copper foil of a negative electrode current collector using a double-sided coating process, left to dry at room temperature, and further dried in an oven, and then subjected to cold-pressed and slit to obtain a negative electrode sheet with an area density of 93.06 $g/m^2$ and a compaction density of 1.6 $g/cm^3$.

### 4. lithium-ion battery preparation

A stacking machine is used to stack the positive electrode sheet, a separator, and the negative electrode sheet in sequence. The separator is a polyethylene film, which is located between the positive electrode sheet and the negative electrode sheet to achieve an isolating effect. After stacking, a cell is assembled into an aluminum laminate pouch, followed by drying, electrolyte injection, and sequential processes including vacuum sealing, aging, formation, degassing, etc., ultimately obtaining a lithium-ion battery with an electrolyte injection coefficient of 3.5, a charging cutoff voltage of 4.2 V and a CB value of 1.1.

### Embodiment 2

### 1. Electrolyte preparation

The electrolyte includes a solvent, a lithium salt, and additives.

The lithium salt is composed of LiFSI and $LiPF_6$ at a mass ratio of 1:1, with a lithium salt concentration of 0.85 mol/L in the electrolyte.

The solvent is composed of cyclic carbonate (ethylene carbonate (EC)) and linear carbonate (dimethyl carbonate (DMC)). A mass ratio of the solvent in the electrolyte is 80%, in which a volume ratio of the cyclic carbonate to the linear carbonate is 3:5.5.

The additives are composed of vinylene carbonate (VC), fluoroethylene carbonate (FEC), succinonitrile (SN), and lithium difluoro(oxalato)borate (LiDFOB), with weight parts of the additives per hundred parts of the electrolyte being 3.6.

### 2. Positive electrode sheet preparation

A positive electrode slurry is preparing by mixing lithium iron manganese phosphate as a positive electrode material, acetylene black as a conductive agent, and PVDF as a binder at a mass ratio of 96:2:2, adding NMP as a solvent, and stirring same under an action of a vacuum stirrer until the system is homogeneous. The positive electrode slurry is uniformly coated onto both surfaces of an aluminium foil of a positive electrode current collector using a double-sided coating process, left to dry at room temperature, and then further dried in an oven, and then subjected to cold-pressed and slit to obtain a positive electrode sheet with an area density of 220 $g/m^2$ and a compaction density of 2.4 $g/cm^3$.

### 3. Negative electrode sheet preparation

A negative electrode slurry is prepared by mixing graphite as a negative electrode material, acetylene black as a conductive agent, and CMC as a binder at a mass ratio of 97:1.5:1.5, adding deionized water as a solvent, and stirring same under an action of a vacuum stirrer until the system is homogeneous. The negative electrode slurry is uniformly coated onto both surfaces of a copper foil of a negative electrode current collector using a double-sided coating process, left to dry at room temperature, and further dried in an oven, and then subjected to cold-pressed and slit to obtain a negative electrode sheet with an area density of 95.6 $g/m^2$ and a compaction density of 1.6 $g/cm^3$.

### 4. lithium-ion battery preparation

A stacking machine is used to stack the positive electrode sheet, a separator, and the negative electrode sheet in sequence. The separator is a polyethylene film, which is located between the positive electrode sheet and the negative electrode sheet to achieve an isolating effect. After stacking, a cell is assembled into an aluminum laminate pouch, followed by drying, electrolyte injection, and sequential processes including vacuum sealing, aging, formation, degassing, etc., ultimately obtaining a lithium-ion battery with an electrolyte injection coefficient of 3.5, a charging cutoff voltage of 4.23 V and a CB value of 1.13.

Embodiment 3

1. Electrolyte Preparation

The electrolyte includes a solvent, a lithium salt, and additives.

The lithium salt is composed of LiFSI and LiPF$_6$ at a mass ratio of 1:1, with a lithium salt concentration of 1.3 mol/L in the electrolyte.

The solvent is composed of cyclic carbonate (a volume ratio of ethylene carbonate (EC) to propylene carbonate (PC) being 1:1) and linear carbonate (ethyl methyl carbonate (EMC)). A mass ratio of the solvent in the electrolyte is 90%, in which a volume ratio of the cyclic carbonate to the linear carbonate is 4.5:7.

The additives are composed of vinylene carbonate (VC), fluoroethylene carbonate (FEC), trimethylsilyl phosphate (TMSP) and 1,3-propane sultone (PS), with weight parts of the additives per hundred parts of the electrolyte being 4.4.

2. Positive electrode sheet preparation

A positive electrode slurry is preparing by mixing lithium iron manganese phosphate as a positive electrode material, acetylene black as a conductive agent, and PVDF as a binder at a mass ratio of 96:2:2, adding NMP as a solvent, and stirring same under an action of a vacuum stirrer until the system is homogeneous. The positive electrode slurry is uniformly coated onto both surfaces of an aluminium foil of a positive electrode current collector using a double-sided coating process, left to dry at room temperature, and then further dried in an oven, and then subjected to cold-pressed and slit to obtain a positive electrode sheet with an area density of 220 g/m$^2$ and a compaction density of 2.4 g/cm$^3$.

3. Negative electrode sheet preparation

A negative electrode slurry is prepared by mixing graphite as a negative electrode material, acetylene black as a conductive agent, and CMC as a binder at a mass ratio of 97:1.5:1.5, adding deionized water as a solvent, and stirring same under an action of a vacuum stirrer until the system is homogeneous. The negative electrode slurry is uniformly coated onto both surfaces of a copper foil of a negative electrode current collector using a double-sided coating process, left to dry at room temperature, and further dried in an oven, and then subjected to cold-pressed and slit to obtain a negative electrode sheet with an area density of 97.3 g/m$^2$ and a compaction density of 1.6 g/cm$^3$.

4. lithium-ion battery preparation

A stacking machine is used to stack the positive electrode sheet, a separator, and the negative electrode sheet in sequence. The separator is a polyethylene film, which is located between the positive electrode sheet and the negative electrode sheet to achieve an isolating effect. After stacking, a cell is assembled into an aluminum laminate pouch, followed by drying, electrolyte injection, and sequential processes including vacuum sealing, aging, formation, degassing, etc., ultimately obtaining a lithium-ion battery with an electrolyte injection coefficient of 3.5, a charging cutoff voltage of 4.27 V and a CB value of 1.15.

Embodiment 4

1. Electrolyte Preparation

The electrolyte includes a solvent, a lithium salt, and additives.

The lithium salt is composed of LiFSI and LiPF$_6$ at a mass ratio of 1:1, with a lithium salt concentration of 1.1 mol/L in the electrolyte.

The solvent is composed of cyclic carbonate (a volume ratio of ethylene carbonate (EC) to propylene carbonate (PC) being 2:1) and linear carbonate (diethyl carbonate (DEC)). A mass ratio of the solvent in the electrolyte is 83%, in which a volume ratio of the cyclic carbonate to the linear carbonate is 3.5:6.

The additives are composed of vinylene carbonate (VC), vinyl ethylene carbonate (VEC), succinonitrile (SN), and lithium difluoro(oxalato)borate (LiDFOB), with weight parts of the additives per hundred parts of the electrolyte being 5.2.

2. Positive electrode sheet preparation

A positive electrode slurry is prepared by mixing lithium iron manganese phosphate as a positive electrode material, acetylene black as a conductive agent, and PVDF as a binder at a mass ratio of 96:2:2, adding NMP as a solvent, and stirring same under an action of a vacuum stirrer until the system is homogeneous. The positive electrode slurry is uniformly coated onto both surfaces of an aluminium foil of a positive electrode current collector using a double-sided coating process, left to dry at room temperature, and then further dried in an oven, and then subjected to cold-pressed and slit to obtain a positive electrode sheet with an area density of 220 g/m$^2$ and a compaction density of 2.4 g/cm$^3$.

3. Negative electrode sheet preparation

A negative electrode slurry is prepared by mixing graphite as a negative electrode material, acetylene black as a conductive agent, and CMC as a binder at a mass ratio of 97:1.5:1.5, adding deionized water as a solvent, and stirring same under an action of a vacuum stirrer until the system is homogeneous. The negative electrode slurry is uniformly coated onto both surfaces of a copper foil of a negative electrode current collector using a double-sided coating process, left to dry at room temperature, and further dried in an oven, and then subjected to cold-pressed and slit to obtain a negative electrode sheet with an area density of 100.6 g/m$^2$ and a compaction density of 1.6 g/cm$^3$.

4. lithium-ion battery preparation

A stacking machine is used to stack the positive electrode sheet, a separator, and the negative electrode sheet in sequence. The separator is a polyethylene film, which is located between the positive electrode sheet and the negative electrode sheet to achieve an isolating effect. After stacking, a cell is assembled into an aluminum laminate pouch, followed by drying, electrolyte injection, and sequential processes including vacuum sealing, aging, formation, degassing, etc., ultimately obtaining a lithium-ion battery with an electrolyte injection coefficient of 3.5, a charge cutoff voltage of 4.3V, and a CB value of 1.19.

Embodiment 5

This embodiment differs from the embodiment 1 in that: the additives in the electrolyte includes vinylene carbonate (VC), fluoroethylene carbonate (FEC), vinyl ethylene carbonate (VEC), trimethylsilyl phosphate (TMSP), succinonitrile (SN), 1,3-propane sultone (PS), lithium difluoro(oxalato)borate LiDFOB. The remaining steps and parameter settings are consistent with those in the embodiment 1.

Embodiment 6

This embodiment differs from the embodiment 1 in that: the CB value of the lithium-ion battery is 1.05, the charging cutoff voltage is 4.35 V, and the weight parts of the additives per hundred parts of the electrolyte are 2.98. The remaining steps and parameter settings are consistent with those in the embodiment 1.

Embodiment 7

This embodiment differs from the embodiment 1 in that: the CB value of the lithium-ion battery is 1.25, the charging cutoff voltage is 4.15 V, and the weight parts of the additives per hundred parts of the electrolyte are 5. The remaining steps and parameter settings are consistent with those in the embodiment 1

Embodiment 8

This embodiment differs from the embodiment 1 in that: the electrolyte injection coefficient of the lithium-ion battery is 2.0. The remaining steps and parameter settings are consistent with those in the embodiment 1.

Embodiment 9

This embodiment differs from the embodiment 1 in that: the electrolyte injection coefficient of the lithium-ion battery is 4.0. The remaining steps and parameter settings are consistent with those in the embodiment 1.

Comparative example 1

This embodiment differs from the embodiment in that: the weight parts of the additives per hundred parts of the electrolyte are 5.25, and $\frac{CB \times V_{ol}}{A_{dd}} = 0.88$. The remaining steps and parameter settings are consistent with those in the embodiment 1.

Comparative example 2

This embodiment differs from the embodiment in that: the charging cutoff voltage $V_{ol}$ of the lithium-ion battery is 4.34V, and $\frac{CB \times V_{ol}}{A_{dd}} = 1.59$ . The remaining steps and parameter settings are consistent with those in the embodiment 1.

Comparative example 3

This embodiment differs from the embodiment 1 in that: the additives do not contain a negative electrode film-forming additive, instead using an equivalent weight of a positive electrode complexing additive as a replacement for the negative electrode film-forming additive in the embodiment 1. The remaining steps and parameter settings are consistent with those in the embodiment 1.

Comparative example 4

This embodiment differs from the embodiment 1 in that: the additives do not contain a positive electrode complexing additive, instead using an equivalent weight of a high-voltage-resistant positive electrode additive as a replacement for the positive electrode complexing additive in the embodiment 1. The remaining steps and parameter settings are consistent with those in the embodiment 1.

Comparative example 5

This embodiment differs from the embodiment 1 in that: the additives do not contain a high-voltage-resistant positive electrode additive, instead using an equivalent weight of a negative electrode film-forming additive as a replacement for the high-voltage-resistant positive electrode additive in the embodiment 1. The remaining steps and parameter settings are consistent with those in the embodiment 1.

Test Methods

1. lithium-ion battery energy density test

Energy density tests are performed on the lithium batteries in the above embodiments and the above comparative examples. Specific test steps are as follows: weighing the weight of a battery to be tested, and recording the weight as m; placing the battery in a fixture, applying a force of 3000 N, charging a single storage battery to 4.3 V at a constant current of 0.33 C, leaving same for 30 min, discharging same to 2.5 V at a constant current of 0.33 C, leaving same for 30 min, and continuously charging and discharging same three times; and calculating a third discharge capacity (in Ah) and an energy E (an average value of three cells), and a discharge energy density E/m (in Wh/kg).

2. lithium-ion battery cycle performance test

Cycling performance tests are performed on the lithium batteries in the above embodiments and the above comparative examples, in which the lithium batteries are fully charged and discharged at 25°C. Specific test steps are as follows: leaving same for 30 min; charging same at a constant current and a constant voltage, in which the current is 0.33 C, the constant voltage is 4.2 V, and the cutoff current is 0.05 C (C is a battery design capacity), repeating for 3 cycles, and recording a final cycle capacity as a calibrated capacity Q; leaving same for 1h, charging same at a constant current and a constant voltage, in which the current is 1Q, the constant voltage is 4.2V, and the cutoff current is 0.05Q; leaving same for 1h; and discharging at a constant-current, in which the current is 1Q, repeating for 2000 cycles, and recording a cycle capacity retention rate of the lithium-ion battery.

3. Negative electrode ICP test

ICP tests are performed on the negative electrode sheets of the lithium-ion batteries after being cycled in the above embodiments and the above comparative examples, to measure contents of Mn element and Fe element in negative electrode materials.

Table 1

| No. | Energy density/Wh.kg$^{-1}$ | Cycle capacity retention/% | Deposition of transition metal ions at negative electrode/ppm | |
|---|---|---|---|---|
| | | | Mn | Fe |
| Embodiment 1 | 196.9 | 87.6 | 186.3 | 18.7 |
| Embodiment 2 | 197.2 | 87.1 | 187.1 | 18.8 |
| Embodiment 3 | 197.3 | 87.3 | 187.0 | 18.6 |
| Embodiment 4 | 197.5 | 87.4 | 187.4 | 18.9 |
| Embodiment 5 | 196.9 | 87.5 | 187.3 | 18.2 |
| Embodiment 6 | 196.8 | 84.3 | 190.2 | 19.4 |
| Embodiment 7 | 193.7 | 84.2 | 189.8 | 19.1 |
| Embodiment 8 | 198.1 | 86.0 | 186.3 | 19.0 |
| Embodiment 9 | 194.9 | 86.4 | 187.5 | 18.7 |
| Comparative example 1 | 196.9 | 81.1 | 191.8 | 19.2 |
| Comparative example 2 | 197.8 | 77.2 | 265.2 | 35.7 |
| Comparative example 3 | 196.9 | 70.6 | 192.2 | 21.1 |
| Comparative example 4 | 196.8 | 71.2 | 193.7 | 20.5 |
| Comparative example 5 | 196.7 | 78.9 | 323.5 | 43.6 |

Referring to the embodiments 1 to 5, the comparative examples 1 and 2, along with the table 1, it can be seen that by controlling the weight parts $A_{dd}$ of the additives per hundred parts of the electrolyte, the charging cutoff voltage $V_{ol}$ of the lithium-ion battery, and the CB value of the lithium-ion battery to satisfy $0.98 \leq \dfrac{CB \times V_{ol}}{A_{dd}} \leq 1.54$, the present disclosure can reduce the deposition of transition metal ions at the negative electrode, ensure the complexation of the transition metal ions at the positive electrode as far as possible, thereby improving the stability of the electrolyte and the stability of the SEI film at the surface of the negative electrode, thereby ensuring a full utilization of the energy density of the lithium-ion battery while maintaining good cycle performance.

In the comparative example 1, the weight parts of the additives per hundred parts of the electrolyte is excessive. Except for the additive amount required for film formation on the positive electrode and the negative electrode by themselves, the remaining additives undergo side reactions in the electrolyte, which increases the impedance of the lithium-ion battery and reduces the cycle performance of the lithium-ion battery. However, the excessive additives also play a certain protective role on the surface of the positive electrode and the negative electrode, so the deposition of the transition metal ions at the negative electrode is not significantly improved.

In the comparative example 2, with the increase of the charging cutoff voltage of the lithium-ion battery while maintaining the same weight parts of the additives per hundred parts of the electrolyte, the CE1 film and the SEI film are damaged during the voltage rising process. Without additional additives participating in the film formation in time, the dissolution of transition metals cannot be inhibited, resulting in significant deposition of transition metal ions at the negative electrode. When the additives in the electrolyte are completely consumed, the solvent in the electrolyte begins to decompose, which will deteriorate the cycle performance of the lithium-ion battery.

The comparative examples 3 to 5 demonstrate that the absence of any one of the negative electrode film-forming additive, the positive electrode complexing additive and the high-voltage-resistant positive electrode additive in the additives, is detrimental to the coordination among the additives to maintain the stability of the electrolyte, especially, the absence of the high-voltage-resistant positive electrode additive is significantly increase the deposition of transition metal ions at the negative electrode, and the cycle performance of the lithium-ion battery is also significantly reduced. Although the absence of either the negative electrode film-forming additive or the positive electrode complexing additive may partially alleviate transition metal ion dissolution from the positive electrode to reduce the deposition of the transition metal ions at the negative electrode, the protective effect of the additives on both the positive electrode and the negative electrode is greatly weakened at this time, resulting in severe deterioration of the cycle performance of the lithium-ion battery.

Referring to embodiments 1, 6 and 7 and table 1, it can be seen that when the CB value is too small, the charging

cutoff voltage $V_{ol}$ is too high and the $A_{dd}$ is too small, even though the relationship among these three still satisfies $0.98 \leq \frac{CB \times V_{ol}}{A_{dd}} \leq 1.54$ , the extremely small $A_{dd}$ will lead to incomplete or poor-quality SEI film formation at the negative electrode, and the poor cooperation between the CB value and $V_{ol}$ will reduce the stability of the electrolyte, all of which are unfavorable for adjusting the cycle performance of the lithium-ion battery, and the phenomenon of transition metal ion deposition at the negative electrode becomes more significant compared to the embodiment 1. When the CB value is too large and the charging cutoff voltage $V_{ol}$ is too low, the energy density of the lithium-ion battery decreases slightly, and the negative electrode will experience over-lithiation during charging, which not only consumes a large amount of electrolyte, but also reduces the ionic conductivity of the electrolyte, thereby being detrimental to the improvement of the cycle performance of the lithium-ion battery.

Referring to the embodiments 1, 8 and 9 and table 1, it can be seen that when the electrolyte filling coefficient is too small, it helps to increase the energy density of the lithium-ion battery. However, the long-term cycling process is usually accompanied by continuous consumption of electrolyte, and an excessively small electrolyte filling coefficient will make the electrolyte insufficient to maintain long-term cycling, thereby deteriorating the cycle performance of the lithium-ion battery. When the electrolyte injection coefficient is too large, the energy density of the lithium-ion battery decreases at this time, and numerous side reactions in the electrolyte will increase the impedance of the lithium-ion battery and worsen its cycle performance.

## Claims

1. A lithium-ion battery, comprising an electrolyte, wherein the electrolyte comprises a solvent, a lithium salt and additives; wherein weight parts of the additives per hundred parts of the electrolyte are denoted as $A_{dd}$, with a unit of $A_{dd}$ being parts; a charging cutoff voltage of the lithium-ion battery is denoted as $V_{ol}$, with a unit of $V_{ol}$ being V;

   a CB value of the lithium-ion battery, the $A_{dd}$ and the $V_{ol}$ satisfy $0.98 \leq \frac{CB \times V_{ol}}{A_{dd}} \leq 1.54$ ; wherein the CB value of the lithium-ion battery is a dimensionless numerical value;
   the additives comprise a negative electrode film-forming additive, a positive electrode complexing additive, and a high-voltage-resistant positive electrode additive.

2. The lithium-ion battery according to claim 1, wherein the CB value of the lithium-ion battery, the $A_{dd}$ and the $V_{ol}$ satisfy $1.06 \leq \frac{CB \times V_{ol}}{A_{dd}} \leq 1.42$ .

3. The lithium-ion battery according to claim 1 or 2, wherein the CB value of the lithium-ion battery ranges from 1.1 to 1.19.

4. The lithium-ion battery according to claim 1 or 2, wherein the weight parts $A_{dd}$ of the additives per hundred parts of the electrolyte range from 3 to 5.2 parts.

5. The lithium-ion battery according to claim 1 or 2, wherein the charging cutoff voltage $V_{ol}$ of the lithium-ion battery ranges from 4.2 to 4.3V.

6. The lithium-ion battery according to claim 1, wherein the negative electrode film-forming additive comprises at least one of vinylene carbonate, fluoroethylene carbonate and vinylethylene carbonate;

   the positive electrode complexing additive comprises at least one of trimethylsilyl phosphate and succinonitrile;
   the high-voltage-resistant positive electrode additive comprises at least one of 1,3-propane sultone and lithium difluoro(oxalato)borate.

7. The lithium-ion battery according to claim 1, wherein the lithium salt comprises at least one of lithium bis(fluorosulfonyl)imide and lithium hexafluorophosphate; a concentration of the lithium salt in the electrolyte is 0.8-1.5 mol/L.

8. The lithium-ion battery according to claim 1, further comprising a positive electrode sheet and a negative electrode sheet, wherein a compacted density of the positive electrode sheet is 2.0-2.6 g/cm³, and/or a single-side area density of the positive electrode sheet is 200-260 g/m².

9. The lithium-ion battery according to claim 8, wherein a compaction density of the negative electrode sheet is 1.55-1.75 g/cm$^3$, and/or a single-side area density of the negative electrode sheet is 80-110 g/m$^2$.

10. The lithium-ion battery according to claim 1, wherein an electrolyte injection coefficient of the lithium-ion battery is 2.3-3.8 g/Ah.

**TRANSLATION**

## INTERNATIONAL SEARCH REPORT

International application No.

**PCT/CN2025/072973**

**A.    CLASSIFICATION OF SUBJECT MATTER**

H01M10/0567(2010.01)i;  H01M10/0525(2010.01)i

According to International Patent Classification (IPC) or to both national classification and IPC

**B.    FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; WPABS; VEN; ENTXT; CNKI: 电解液, 添加剂, 容量平衡, CB, SEI, CEI, 正极, 阴极, 络合, 螯合, 充电, 截止, 电压, electrolyte, additive, capacity balance, solid electrolyte interface, cathode electrolyte interface, positive, cathode, complexation, chelation, charging, cut-off, voltage

**C.    DOCUMENTS CONSIDERED TO BE RELEVANT**

| Category* | Citation of document, with indication, where appropriate, of the relevant passages | Relevant to claim No. |
|---|---|---|
| Y | CN 105742707 A (SHENZHEN CAPCHEM TECHNOLOGY CO., LTD.) 06 July 2016 (2016-07-06)<br>        description, paragraphs 25-76 | 1-10 |
| Y | CN 115395081 A (JIANGSU ZENERGY BATTERY TECHNOLOGIES CO., LTD.) 25 November 2022 (2022-11-25)<br>        description, paragraphs 29-72 | 1-10 |
| Y | CN 112349960 A (CONTEMPORARY AMPEREX TECHNOLOGY CO., LTD.) 09 February 2021 (2021-02-09)<br>        description, paragraphs 15-50 | 1-10 |
| A | CN 116093433 A (XIAMEN HITHIUM ENERGY STORAGE TECHNOLOGY CO., LTD.) 09 May 2023 (2023-05-09)<br>        entire document | 1-10 |
| A | KR 20180050781 A (SOULBRAIN CO., LTD.) 16 May 2018 (2018-05-16)<br>        entire document | 1-10 |

☐ Further documents are listed in the continuation of Box C.     ☑ See patent family annex.

| | |
|---|---|
| *    Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **25 August 2025** | **27 August 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**TRANSLATION**

### INTERNATIONAL SEARCH REPORT
Information on patent family members

International application No.

**PCT/CN2025/072973**

| Patent document cited in search report | | | Publication date (day/month/year) | Patent family member(s) | | | Publication date (day/month/year) |
|---|---|---|---|---|---|---|---|
| CN | 105742707 | A | 06 July 2016 | US | 2019089000 | A1 | 21 March 2019 |
| | | | | US | 10826123 | B2 | 03 November 2020 |
| | | | | WO | 2017173743 | A1 | 12 October 2017 |
| | | | | CN | 105742707 | B | 14 August 2018 |
| CN | 115395081 | A | 25 November 2022 | CN | 115395081 | B | 18 October 2024 |
| CN | 112349960 | A | 09 February 2021 | WO | 2021023131 | A1 | 11 February 2021 |
| | | | | CN | 112349960 | B | 07 December 2021 |
| CN | 116093433 | A | 09 May 2023 | WO | 2024164683 | A1 | 15 August 2024 |
| KR | 20180050781 | A | 16 May 2018 | None | | | |

Form PCT/ISA/210 (patent family annex) (July 2022)

**EP 4 783 289 A1**

## REFERENCES CITED IN THE DESCRIPTION

**Patent documents cited in the description**

- CN 2024118043325